(19) Europäisches Patentamt
European Patent Office
Office européen des brevets

(11) Numéro de publication: **0 165 849 B1**

(12) # FASCICULE DE BREVET EUROPEEN

(45) Date de publication du fascicule du brevet: **20.04.88**

(51) Int. Cl.⁴: **C 08 G 77/42**, C 08 G 18/10, C 08 G 18/61

(21) Numéro de dépôt: **85401025.3**

(22) Date de dépôt: **24.05.85**

(54) **Copolymère greffé de silicone et de polylactone lié par une liaison uréthanne.**

(30) Priorité: **30.05.84 FR 8408510**

(43) Date de publication de la demande: **27.12.85 Bulletin 85/52**

(45) Mention de la délivrance du brevet: **20.04.88 Bulletin 88/16**

(84) Etats contractants désignés: **AT BE CH DE FR GB IT LI LU NL SE**

(56) Documents cités:
**DE - A - 1 944 969**
**FR - A - 2 168 221**
**US - A - 3 778 458**

(73) Titulaire: **RHONE-POULENC RECHERCHES, 25 Quai Paul Doumer, F-92408 Courbevoie Cedex (FR)**

(72) Inventeur: **Gay, Michel, 11, rue Garibaldi, F-69006 - Lyon (FR)**
Inventeur: **Millet, Claude, 14, rue Jean de La Bruyère, F-69800 - Saint-Priest (FR)**

(74) Mandataire: **Seugnet, Jean Louis et al, RHONE-POULENC INTERSERVICES Service Brevets Chimie 25, quai Paul Doumer, F-92408 Courbevoie Cédex (FR)**

**EP 0 165 849 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un copolymère greffé de silicone et de polylactone relié par liaison uréthanne, son procédé de préparation et son utilisation notamment comme additif en particulier dans le chlorure de polyvinyle et ses copolymères notamment en vue de leur utilisation dans le domaine biomédical.

Par FR-A-1 291 937 on connait déjà un procédé de préparation de copolymères séquencés polydiorganosiloxanes et polyuréthannes contenant éventuellement les polyesters.

Selon FR-A-1 427 660 on décrit l'utilisation de produits d'addition d'organopolysiloxanes et de polyisocyanates qui peuvent être ceux décrits dans le brevet français 1 291 937, comme additifs dans le chlorure de polyvinyle à raison de 0,01% à 30% en poids d'additif pour améliorer le travail mécanique comme l'extrusion, le calandrage etc.

Selon FR-A-2 005 037, on décrit de façon générale des copolymères séquencés, entre autres polysiloxane-polylactone pouvant être utilisés comme additif pour modifier les propriétés de surface du PVC, sans décrire explicitement une application biomédicale, et un copolymère particulier séquencé polysiloxane-polylactone.

Selon FR-A-2 007 788 on décrit des compositions contenant des copolymères à blocs de lactone et de polysiloxane utilisables comme agents tensioactifs et/ou comme stabilisants de mousse dans la fabrication de mousse, les blocs polysiloxanique et polylactone étant reliés par un groupement de liaison organique ayant de 2 à 12 atomes de carbone sans préciser qu'un tel groupe puisse comporter des groupements uréthanne.

Dans FR-A-2 017 527 on décrit des copolymères à bloc polysiloxane et polyétheruréthanne, lesdits blocs étant réunis par des liaisons silicium-azote, ces copolymères présentant une grande compatibilité avec le sang.

Dans FR-A-2 491 938 et FR-A-2 497 217 on décrit des polymères séquencés compatibles avec le sang et renfermant une succession de segments polyalkylsiloxane, polyuréthanne ou polyuréeuréthanne, et oxyde de polyalkylène. La possibilité de faire des copolymères greffés est évoquée page 8, lignes 9 à 20 et page 11 lignes 9 à 14 sur un polydiméthylsiloxane présentant des terminaisons hydroxyalkyle mais n'est pas explicitement décrite.

En outre il n'est ni suggéré ni décrit de relier par une liaison uréthanne une polylactone sur un polysiloxane présentant des groupes hydroxyalkyle dans la chaîne.

La présente invention a pour but de proposer un nouveau copolymère greffé de silicone et de polylactone lié par une liaison uréthanne qui soit un excellent additif pour de nombreuses compositions polymériques formées de polymères, de copolymères, de polymères élastomériques et de résines, et plus particulièrement pour les polymères de chlorure de vinyle (PVC) et ses copolymères, en tant qu'agent plastifiant, agent pour améliorer le travail mécanique et/ou agent conférant la biocompatibilité.

La présente invention a également pour but de proposer un procédé de préparation industrielle d'un tel copolymère greffé.

La présente invention a également pour but de proposer un nouveau copolymère de structure chimique simple peu coûteux et préparé à partir de matières premières se trouvant dans le commerce ou très faciles à préparer.

Ces buts et d'autres sont atteints par la présente invention qui concerne en effet des copolymères greffés de silicone et de polylactone de formule générale moyenne:

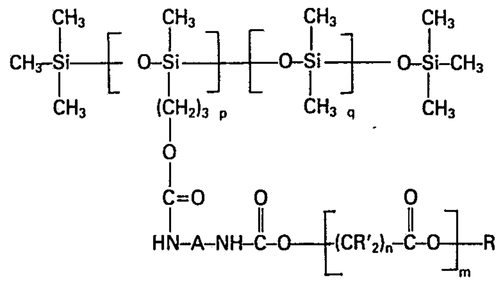

(I)

dans laquelle:

p est un nombre entier ou décimal compris entre 1,5 et 6 inclus de préférence entre 2 et 4 inclus

q est un nombre entier ou décimal compris entre 0 et 20 inclus de préférence entre 6 et 15

De préférence, dans la formule (I), les motifs méthylhydroxypropylsiloxaniques greffés sont séparés par au moins un, de préférence au moins 2, motif diméthylsiloxanique.

A est un radical hydrocarboné bivalent comportant de 2 à 20 atomes de carbone inclus, de préférence de 4 à 15 atomes de carbone inclus et qui constitue un reste hydrocarboné d'une molécule de diisocyanate.

De préférence A est un radical alkyle linéaire ayant de 4 à 15 atomes de carbone, comme par exemple ceux choisis parmi $-(CH_2)_4-$, $-(CH_2)_5-$ et $-(CH_2)_6-$.

Des radicaux A présentant uniquement des restes alkyle, cycloalkyle ou aryle en particulier phényle, sont également utilisables comme par exemple les radicaux A suivants:

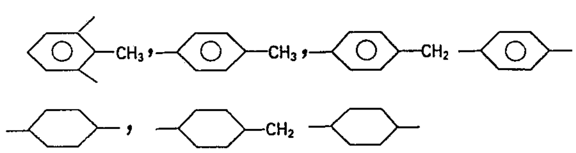

n est un nombre entier compris entre 3 et 12 inclus, de préférence

n est 3, 4 ou 5;

m est un nombre entier compris entre 2 et 25, de préférence entre 4 et 14 inclus;

les radicaux R', identiques ou différents, représentent un atome d'hydrogène ou un radical alkyle en $C_1$–$C_4$;

R est un radical hydrocarboné contenant au plus 24 atomes de carbone, de préférence choisis parmi un radical alkyle linéaire ou ramifié $C_2$–$C_{24}$, de

préférence en $C_{14}$–$C_{20}$, et un radical phénylalkyle dont la partie alkyle linéaire ou ramifiée est en $C_1$–$C_{20}$. De préférence R′ est un atome d'hydrogène et n est un nombre entier choisi parmi 3, 4 et 5 et de façon encore plus préférée n = 5.

La présente invention vise également deux procédés particuliers permettant d'aboutir aux copolymères greffés de formule (I), elle vise en outre les produits obtenus directement par ces deux procédés ainsi que l'utilisation de ces produits comme additif dans les compositions polymériques, à base de polymères, copolymères et résines, en particulier dans le PVC et ses copolymères, notamment pour les applications biomédicales.

Pour la mise en œuvre de ces procédés, on utilise les produits de départ suivants:

On utilise tout d'abord comme siloxane de départ un produit de formule:

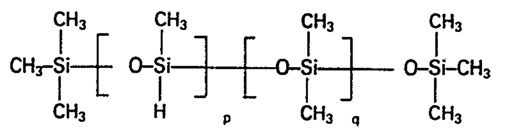 (II)

dans laquelle:

p est compris entre 1,5 et 6 inclus de préférence entre 2 et 4

q est compris entre 0 et 20 inclus, de préférence entre 6 et 15.

Ces produits sont bien connus dans l'industrie des silicones et sont généralement disponibles dans le commerce; ils sont par exemple décrits dans US-A-3 220 942, US-A-3 341 111 et US-A-3 436 366.

Sur les produits de formule (II), on fait réagir l'alcool allylique par exemple suivant le procédé décrit dans US-A-2 970 150.

On obtient ainsi des siloxanes de formule (II) ci-dessus dont certains sont déjà disponibles dans le commerce:

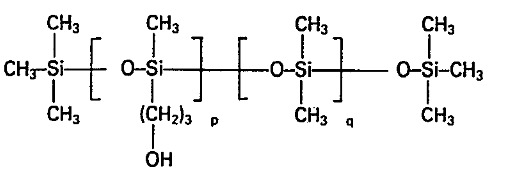 (III)

dans laquelle p, q ont la même signification qui ci-dessus.

On peut utiliser comme catalyseur pour fair réagir l'alcool allylique sur les siloxanes de formule (II) des complexes du platine notamment les complexes de platine-oléfine comme décrit dans US-A-3 159 601 et US-A-3 159 662, les produits de réaction des dérivés du platine avec des alcools, des aldénydes et des éthers décrits dans le brevet US-A-3 220 972, les catalyseurs platine-vinylsiloxane décrits dans les FR-A-1 313 846 et son addition 88 676 et FR-A-1 480 409 ainsi que les complexes du Pt° décrits dans les brevets US-A-3 715 334, US-A-3 775 452 et US-A-3 814 730.

Comme produit de formule (III) on préfère les produits dont la masse moléculaire est comprise entre 600 et 5000. En effet les produits de masse moléculaire supérieurs à 5000 présentent une viscosité importante et qui peut s'avérer gênante par la suite pour aboutir aux produits de formule (I).

Les produits encore plus préférés sont les produits de formule (III) dont chaque motif méthylgammahydroxypropylsiloxanique est séparé l'un de l'autre par au moins un, de préférence au moins 2, motifs diméthylsiloxanique.

Comme diisocyanate que l'on fait réagir sur les produits de formule (III) on utilise les diisocyanates de formule:

OCN–A–NCO (IV)

dans laquelle A est un radical hydrocarboné bivalent comportant de 2 à 20 atomes de carbone inclus de préférence, de 4 à 15 atomes de carbone inclus.

Comme exemples d'isocyanates on peut citer l'éthylènediisocyanate, le propylènediisocyanate, le tétraméthylènediisocyanate, le pentaméthylènediisocyanate, l'hexaméthylènediisocyanate, l'octaméthylènediisocyanate, l'undécaméthylènediisocyanate, le dodécaméthylènediisocyanate, le 3,3′-diisocyanatodipropyléther, le cyclopentylène-1,3-diisocyanate, le cyclohexylène-1,4-diisocyanate, le 2,4-tolylènediisocyanate, le 2,6-tolylènediisocyanate, le xylylène-1,4-diisocyanate, le xylylène-1,3-diisocyanate, le 4,4′-diphénylméthanediisocyanate, le 4,4′-dicyclohexylméthanediisocyanate, le 2-nitrodiphényl-4,4′-méthanediisocyanate, le 4,4′-diphénylpropanediisocyanate, le p-isocyanatobenzylisocyanate, le m-phénylènediisocyanate, le p-phénylènediisocyanate, le naphtalène-1,4-diisocyanate, le naphthalène-1,5-diisocyanate, le furfurylidènediisocyanate, le p,p′,p″-triphénylméthanetriisocyanate, le diphényl-4,6,4′-triisocyanate, etc.

Les diisocyanates préférés sont le tétraméthylènediisocyanate, le pentaméthylènediisocyanate, et surtout l'hexaméthylènediisocyanate. On peut toutefois utiliser des diisocyanates aromatiques ou cycloaliphatiques qui se trouvent couramment dans le commerce comme le 2,4- ou le 2,6-tolylènediisocyanate, le 4,4′-diphénylméthanediisocyanate, le cyclohexylène-1,4-diisocyanate et le 4,4′-dicyclohexylméthanediisocyanate.

Comme autre produit de départ, on utilise une polylactone à terminaison monohydroxylée pouvant comporter des motifs alkyle en $C_1$–$C_4$, de préférence des motifs d'epsilon-caprolactone, de formule:

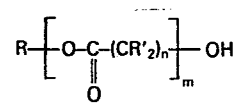 (V)

dans laquelle R, R′, n et m ont la même signification que dans la formule (I) ci-dessus.

La polylactone monohydroxylée de formule (V) est obtenue de façon connue par réaction de m moles de lactone sur le mole de l'alcool correspondant R OH.

Des exemples de lactones que l'on peut utiliser pour faire réagir sur l'alcool R OH comprennent de préférence la gamma-butyrolactone, la delta-valé-

rolactone et surtout l'epsilon-caprolactone; d'autres lactones sont utilisables comme par exemple la beta-propalactone et la lactone de l'acide 7-hydroxyheptanoïque.

Les polylactones de formule (V) préférées sont celles présentant un poid moléculaire compris entre environ 500 et 3000.

Selon un premier procédé dénommé procédé (1) pour aboutir aux copolymères greffés de formule (I), on fait réagir dans un réacteur une mole de polylactone monohydroxylée de formule (V) avec une mole de diisocyanate de formule (IV) à une température comprise entre 90 et 140 °C, de préférence aux environs de 110 °C pendant une durée comprise entre 10 min et 2 h, puis on additionne dans le même réacteur en présence d'un solvant organique, par exemple l'acétate de butyle, un polysiloxane de formule (III) à une température comprise entre 90 et 140 °C suivant une quantité telle que l'on additionne seulement un équivalent environ de motif méthylgammahydroxypropylsiloxanique.

Le produit de réaction obtenu comportant un copolymère greffé de formule (I) en mélange avec des sous-produits est utilisable comme additif dans les compositions polymériques et pour les applications visées par la présente demande.

Selon un deuxième procédé dénommé procédé (2), qui permet d'aboutir au copolymère greffé de formule (I) à un plus haut degré de pureté, on fait réagir dans une première étape dans un réacteur à température comprise entre 90 et 140 °C une mole de polylactone de formule (V) sur un excès molaire généralement de 4 à 10 moles, de préférence de 6 à 8 moles, de diisocyanate de formule (IV) et, en fin de réaction, on élimine de diisocyanate en excès.

On peut éliminer le diisocyanate en excès par tout moyen adapté, par exemple par évaporation au moyen d'un évaporateur à film agité.

Dans une deuxième étape on ajoute au produit formé lors de la première étape en milieu solvant organique, par exemple dans l'acétate de butyle, un polysiloxane de formule (III) à une température comprise entre 90 et 160 °C suivant une quantité telle que l'on additionne seulement environ un équivalent de motif méthylgammahydroxypropylsiloxanique.

Le produit de réaction obtenu comportant principalement un copolymère greffé de formule (I) est utilisable comme additif dans les compositions polymériques et pour les applications visées par la présente demande.

Les copolymères greffés selon l'invention sont très avantageusement utilisables comme additif à des compositions polymériques à base de polymère, copolymère et résines, modifiant notamment leurs propriétés de surfaces, ce qui est plus particulièrement avantageux pour les applications biomédicales, en particulier pour conférer à ces compositions polymériques de base une biocompatibilité surtout une hémocompatibilité remarquable. Ces compositions polymériques englobent n'importe quelle composition susceptible d'être compatible et/ou d'être incorporée à des quantités pouvant être très importantes de copolymères greffés de formule (I), jusqu'à former un produit analogue à un alliage.

Des compositions polymériques de ce type sont en premier lieu des polymères thermoplastiques comme le PVC et ses copolymères, tels que les copolymères acétate de vinyle/chlorure de vinyle, acétate de vinyle/chlorure de vinyle/acide maléique, le chlorure de polyvinylidène, le polystyrolène, le polyméthacrylate de méthyle, le polyéthylène, le polypropylène, les polyamides et le polytéréphthalate, d'éthylèneglycol, les polymères élastomériques, comme le caoutchouc naturel, le caoutchouc butyle, le caoutchouc nitrile, le polyisoprène, le copolymère butadiène/styrolène, les diverses formes de caoutchouc silicone et des résines telles que les résines urée-formaldéhyde, les résines phénol-formaldéhyde, les résines acryliques et les résines époxy.

Les copolymères greffés selon l'invention sont plus spécialement utilisables pour conférer au chlorure de polyvinyle (PVC) et à ses copolymères, la compatibilité avec le sang. Cette compatibilité est liée aux propriétés physiques des surfaces. Elle est indispensable pour des dispositifs biomédicaux ayant des matériaux en contact avec le sang qui peuvent être réalisés avec le PVC ou ses copolymères.

Les copolymères greffés selon l'invention sont particulièrement utiles pour conférer la biocomptabilité quand ils sont ajoutés à une dose de 0,1 à 10% en poids, calculés en poids d'équivalent silicone, à des compositions polymériques de base utilisées habituellement dans le domaine biomédical et qui comprennent en plus du PVC et de ses copolymères les polyesters-polyuréthannes, les polysulfones, les polycarbonates, les polyoléfines comme le polyéthylène, le polypropylène, le polystyrène, les polyesters, le polyacrylonitrile et le polytéréphthalate d'éthylène glycol.

De façon surprenante, on s'est aperçu que les polymères greffés selon l'invention, associés aux compositions polymériques ci-dessus et en particulier au PVC et à ses copolymères conduisait à des matériaux souples, pour certains transparents et en particulier thermoscellables avec un caractère d'hémocompatibilité particulièrement élevé, en limitant par ailleurs les problèmes de migration des plastifiants. Ces matériaux présentaient en outre une excellente perméabilité à l'oxygène ce qui les rend tout particulièrement utilisables pour réaliser des poches à culot plaquettaire pour la conservation des plaquettes sanguines. En effet les compositions polymériques comportant l'additif selon l'invention possèdent une tenue au froid remarquable pouvant aller jusqu'à −100 °C et plus, propriété indispensable pour réaliser des poches à sang conservées à environ −80 °C.

On s'est aperçu, par ailleurs, conformément à l'invention que tout ou partie du plastifiant de la composition polymérique de base pouvait être remplacé par le copolymère greffé selon l'invention. Dans ce cas on peut utiliser de 1 à 70 parties en poids de copolymère greffé pour 100 parties de composition polymérique de base. On obtient

alors une composition polymérique de base modifiée pouvant avoir des applications multiples.

On obtient notamment une hémocompatibilité excellente et on peut éviter l'emploi de plastifiant susceptible de migrer; on obtient aussi une bonne soudabilité liée à une bonne extrudabilité.

Par ailleurs les copolymères greffés ajoutés en particulier au PVC et à ses copolymères présentent de très bonnes caractéristiques de lubrifiant interne et externe.

Les copolymères greffés selon l'invention sont également utilisables pour la désaération et le débullage des plastisols.

Une composition élastomérique de base, en particulier dans le cas où elle est du caoutchouc butyle, comportant le copolymère greffé selon l'invention peut servir à réaliser des vessies dilatables résistantes et non adhérentes utilisées lors de la fabrication de pneumatiques selon le procédé décrit dans les FR-A-1 247 744 et FR-A-2 494 294.

L'incorporation de copolymère greffé à une composition élastomérique de base permet de réaliser des courroies transporteuses présentant des coefficients de frottement adaptés.

Les polymères greffés selon l'invention sont utilisables également pour améliorer le caractère antiadhérent de revêtements en élastomères silicone.

Ces revêtements sont appliqués généralement sur toutes les surfaces devant présenter une bonne résistance à l'encrassement et/ou un caractère non collant vis-à-vis de produits collants, poisseux ou visqueux. En particulier, il est souhaitable d'améliorer la résistance à l'encrassement de revêtements appliqués à des structures immergées totalement ou partiellement dans l'eau douce ou l'eau de mer. Habituellement, ces revêtements renferment des dérivés toxiques pour les animalcules aquatiques ou marins: l'utilisation d'élastomères silicones permet d'éviter cet emploi. Cependant le caractère antiadhérent des élastomères silicones peut être encore amélioré par l'incorporation des polymères greffés de l'invention au sein de ces élastomères.

La présente invention vise les articles et les matériaux utilisables notamment pour des applications biomédicales, réalisées à partir de telles compositions polymériques de base modifiées par les copolymères greffés de l'invention.

D'autres avantages et caractéristiques de la présente invention apparaîtront à la lecture des exemples suivants donnés à titre illustratif nullement limitatif.

Exemple 1

Préparation d'une huile polydiméthylsiloxanique à motifs gammahydroxypropylée dans la chaîne

Dans un ballon tricol de 1 litre on charge 500 g d'une huile polydiméthylpolyhydrogénométhylsiloxanique bloquée à chacune des deux extrémités de la chaîne par un motif triméthylsilyle. Cette huile porte en moyenne 2,2 motifs hydrogénométhylsiloxanique par molécule dans la chaîne. La masse moléculaire en nombre Mn du polysiloxane est de 2125, sa masse moléculaire pondérale Mw est de 3970, son indice de polydispersité Ip est de 1,9 et sa viscosité à 25 °C V est de 25 mPa.s. On porte la charge à une température de 120 °C.

On introduit un mélange d'alcool allylique et de catalyseur au platine Pt°. Ce dernier est un complexe de Pt° et de tétravinyltétraméthylcyclosiloxane préparé conformément à l'enseignement des brevets US-A-3 715 334, US-A-3 775 452 et US-A-3 814 730 utilisée à raison de 8 mg de Pt° métal par kg de polysiloxanes. L'alcool allylique est ajouté en quantité telle qu'il présente un excès molaire de 50% de groupes OH par rapport aux groupes SiH de l'huile suivant le mode opératoire ci-après.

On charge une ampoule de coulée avec 80% de l'alcool à introduire et renfermant la totalité du catalyseur, 20% de ce mélange est coulé puis on rajoute le restant d'alcool, le température étant maintenue à 120 °C. L'addition s'effectue en 4 heures.

Les SiH résiduaires sont dosés en fin d'addition de l'alcool et la réaction est poursuivi jusqu'à disparition totale des SiH dans la masse réactionnelle (durée 3 h). L'excès d'alcool est éliminé en maintenant le chauffage à 120 °C pendant 30 min sous pression réduite [13,3 millibars (mb)].

L'huile ainsi obtenue est colorée et trouble, après traitement au noir et filtration sur terres de diatomées Clarcel on obtient une huile incolore et limpide avec un rendement en hydroxyles pratiquement quantitatif.

Caractéristiques de l'huile polydiméthylsiloxanique hydroxypropylée (PDMS) obtenue:

% en poids OH théorique calculé: 1,63% dose: 1,63–1,67% Mn = 2210, Mw = 5050, Ip = 2,1, V 25 °C = 67 mPa.s, 2,2 fonctions hydroxypropyle par mole.

Exemple 2

On répète le mode opératoire de l'exemple 1 sauf que l'on charge dans le réacteur une huile polyhydrogénométhylsiloxanique ayant les caractéristiques suivantes:

Mn = 1325, Mw = 1925, Ip = 1,45, V 25 °C = 25 mPa.s., elle porte en moyenne 2,5 motifs SiH/molécule dans la chaîne.

On obtient alors une huile polydiméthylsiloxanique (PDMS) gammahydroxypropylée dans la chaîne ayant les caractéristiques suivantes:

Mn 1925, Mw 2095, Ip = 1,6, V 25 °C = 66 mPa.s., 2,4 fonctions OH par mole.

Exemple 3

On répète le mode opératoire de l'exemple 1 sauf que l'on charge dans le réacteur une huile polyhydrogénométhylsiloxanique ayant les caractéristiques suivantes:

Mn = 2295, Mw = 4000, Ip = 1,75, V 25 °C = 26 mPa.s., elle porte en moyenne 4,7 motifs SiH par molécule dans la chaîne.

On obtient alors une huile PDMS gammahydroxypropylée dans la chaîne ayant les caractéristiques suivantes:

% en poids OH (théorique calculé 3,11%; dosé 3,13%

Mn = 2260, Mw = 4560, Ip = 2,0, V 25 °C = 267 mPa.s., 4,6 fonctions hydroxypropyle par molécule.

Exemple 4

Synthèse d'un copolymère greffé par le procédé (1):

Dans un réacteur de 6 litres on charge 1200 g de poly epsilon-caprolactone monohydroxylée (Mn 3000) (PCL) obtenue par réaction d'un excès molaire de caprolactone sur une mole d'alcool linéaire $C_{16}H_{33}OH$, puis 68,5 g d'hexaméthylène-diisocyanate (HMDI). Le mélange est porté à 110 °C en suivant la réaction des isocyanates sur les hydroxyles de la PCL. Après avoir atteint le taux théorique de NCO, on ajoute le solvant (acétate de butyle) en quantité suffisante pour obtenir un mélange réactionnel homogène, soit 3256 g au total de solvant dont 3100 g dans le prépolymère. 156 g du même solvant sont ajoutés dans une ampoule de coulée contenant 218,8 g d'huile PDMS hydroxypropylée (Mn 1295, Mw 2095, Ip = 1,6, V 25 °C 66 mPa.s., 2,4 équivalent OH/mole) préparée à l'exemple 2. Le mélange de l'ampoule est coulé à 110 °C en 5 min puis on porte le milieu réactionnel à reflux (température: 126 °C) pour distiller en continu à pression atmosphérique et terminer sous pression réduite (6,6 mb).

On dose les NCO résiduaires et on poursuit le chauffage à 130–140 °C jusqu'à disparition totale des isocyanates (1 h).

Le copolymère obtenu est coulé dans un plateau, refroidi et concassé.

Caractéristiques du copolymère obtenu:

Rendement pondéral: 100% Point de fusion ≃ 60/70°

Mn 5500 (étalonnage polystyrène), Mw 32700, Ip = 6

% en poids de PDMS dans le copolymère (équivalent silicone): 14%

Exemple 5

Synthèse d'un copolymère greffé par le procédé (2):

1ère étape: Préparation du prépolymère polylactone à NCO exempt d'HMDI libre

Dans un réacteur de 1 litre on charge 355 g d'HMDI (2,111 moles) et l'on coule 600 g de PCL monohydroxylée: (Mn = 2000) (0,3 mole) à 120 °C en 18 min. On dose les NCO pour s'assurer de l'addition complète de l'HMDI sur la PCL.

Le prépolymère contenant l'exès d'HMDI est strippé à 170 °C sous une pression de 0,3 mm de mercure. On obtient ainsi un prépolymère exempt d'HMDI libre.

2ème étape: Synthèse du copolymère polyméthylsiloxane/polylactone (PDMS/PCL).

Dans un réacteur de 1 litre, on charge 380 g de prépolymère décrit ci-dessus, puis 1000 g de solvant. On porte à 110 °C et on coule en 5 min le mélange d'huile PDMS obtenue à l'exemple 3 96,2 g en solution dans 111 g de solvant soit une concentration finale de 70% en poids de solvant, pour obtenir un mélange homogène. La masse réactionnelle est portée à reflux et l'on distille le solvant en continu à pression atmosphérique, puis on termine la concentration sous pression réduite (6,6 mb). Durée de la concentration 2 h. Le chauffage est poursuivi 3 h à 140 °C pour terminer la réaction d'addition des NCO sur les hydroxyles de l'huile PDMS.

Le copolymère est coulé en plateau, refroidi et concassé. Rendement pondéral 100%, point de fusion 60/70 °C, % en poids de PDMS dans le copolymère 20,2%.

Exemple 6

Mise en évidence de l'hemocompatibilité:

On réalise par des méthodes connues des catheters de diamètre intérieur de 0,9 mm et de diamètre extérieur de 1,5 mm réalisés avec du PVC contenant 5% en poids de copolymère greffé (0,7% en poids d'équivalent silicone) obtenu à l'exemple 5 ci-dessus et également sans le copolymère pour réaliser un catheter témoin.

Avec ces catheters, on effectue le test de Dudley tel que décrit par Dudley B. Synthesis and characterization of blood compatible surfaces. Trans. Am. Soc. Artif. Int. Organs, vol. 22, p. 538 (1976).

Le PVC utilisé est le PVC Ekavyl ® FK 70 (Ip = 122–132) fabriqué et commercialisé par la Société Atochem.

Suivant ce test on implante le catheter à tester et un catheter témoin respectivement dans chacune des veines dorsales des pattes avant gauche et droite d'un chien maintenu sous anesthésie. On ligature la veine au niveau de l'implantation du catheter. On effectue le test de Dudley pendant 30 min, les catheters sont ensuite fermés avec une pince métallique puis ouverts à différents temps afin de tester leur perméabilité et doser la fibrinopeptide A (FPA) de l'échantillon de sang recueilli. Le débit sanguin est de l'ordre de 30 ml/h. Le dosage de FPA est effectué par le kit de mesure immuno-enzymatique du FPA Asserachrom ® FPA commercialisé par la Société STAGO.

Ce kit de mesure est spécifique du FPA humain mais des essais ont montré qu'il était utilisable pour la mesure du FPA du chien. Il est bien connu que la mesure du FPA est actuellement le paramètre le plus sensible et le plus précoce permettant de révéler l'activation de la coagulation. Si la teneur en FPA devient supérieure à 20–40 nanog. par ml de sang, le sang est sur le point de coaguler.

Les résultats obtenus sont rassemblés dans le tableau I ci-après.

De ce tableau I il résulte que la coagulation intervient dans le catheter témoin au bout de 15 à 25 min alors que cette dernière n'intervient dans les 2 essais (1) et (2) effectués qu'au bout d'une durée supérieure à 45 min pour le cathéter en PVC avec l'additif selon l'invention.

Par ailleurs le dosage de FPA du sang passant dans le cathéter selon l'invention donne une valeur toujours inférieure à 15 nanog./ml de sang.

Tableau I

| Durée de l'écoulement du sang | 0 | 2 | 5 | 10 | 15 | 20 | 25 | 30 | 35 | 40 | 45 |
|---|---|---|---|---|---|---|---|---|---|---|---|
| Cathéter selon l'invention | | | | | | | | | | | |
| (A) essai (1) | 23 | 3 | 5 | 5 | 4 | 5 | 3 | 1 | 3 | 2 | 2 |
| (A) essai (2) | 25 | 5,5 | 2 | 2 | 2,5 | 3 | 4 | 2 | 2 | 2 | 2 |
| Cathéter témoin | | | | | | | | | | | |
| (A) | 30 | 10 | 36 | 10 | 24 | (B) | | | | | |

(A): quantité de FPA dosé en nanog. par ml de sang
(B): coagulation

**Revendications**

1. Copolymère greffé de formule générale moyenne:

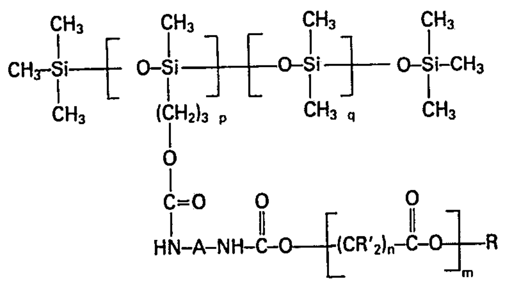 (I)

dans laquelle:

p est un nombre entier ou décimal compris entre 1,5 et 6 inclus,

q est un nombre entier ou décimal compris entre 0 et 20 inclus,

A est un radical hydrocarboné bivalent comportant de 2 à 20 atomes de carbone inclus

n est un nombre entier compris entre 3 et 12 inclus

m est un nombre entier compris entre 2 et 25 inclus.

Les radicaux R', identiques ou différents, représentent un atome d'hydrogène ou un radical alkyle en $C_1$–$C_4$.

Le radical R est un radical hydrocarboné contenant au plus 24 atomes de carbone.

2. Copolymère greffé selon la revendication 1, caractérisé en ce que:

p est compris entre 2 et 4 inclus

q est compris entre 6 et 15 inclus

A est un radical choisi parmi:

$-(CH_2)_4-$, $-(CH_2)_5$, $-(CH_2)_6-$

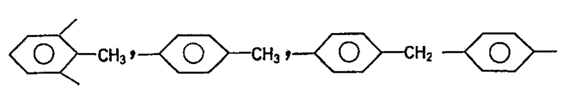

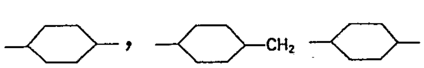

n est 3, 4 ou 5

m est compris entre 4 et 14 inclus

R' représente l'atome d'hydrogène

R est un radical alkyle linéaire ou ramifié en $C_2$–$C_{24}$, ou un radical phénylalkyle dont la partie alkyle linéaire ou ramifiée est en $C_2$–$C_{20}$.

3. Copolymère greffé selon la revendication 2, caractérisé en ce que:

n = 5

R est un radical alkyle linéaire en $C_{14}$–$C_{20}$.

4. Procédé de préparation de copolymères greffés tels que définis selon l'une quelconque des revendications 1 à 3, caractérisé en ce qu'on fait réagir à une température comprise entre 90 et 140 °C une mole de polylactone de formule:

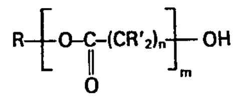 (V)

dans laquelle R, R', n et m ont la même signification que ci-dessus sur une mole de diisocyanate de formule:

OCN–A–NCO (IV)

dans laquelle A a la même signification que ci-dessus, puis on fait réagir le produit réactionnel obtenu, au sein d'un solvant organique à une température comprise entre 90 et 140 °C sur un polysiloxane de formule:

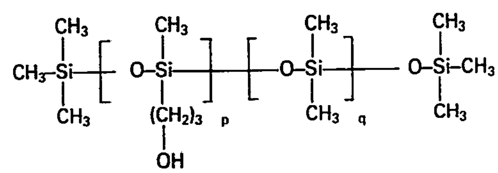 (III)

en quantité telle que l'on additionne seulement un équivalent environ de motif méthylgammahydroxypropylsiloxanique.

5. Procédé de préparation de copolymères greffés tels que définis selon l'une quelconque des revendications 1 à 3, caractérisé en ce qu'au cours d'une première étape, on fait réagir une mole de polylactone de formule (V) telle que définie ci-dessus, sur un excès molaire de diisocyanate de formule (IV) telle que définie ci-dessus, et, en fin de réaction, on élimine le diisocyanate en excès, et en ce qu'au cours d'une deuxième étape on ajoute au mélange réactionnel obtenu à la première étape un polysiloxane de formule (III) telle que définie ci-dessus en milieu solvant organique à une température comprise entre 90 et 160 °C, suivant une quantité telle que l'on additionne seulement environ un équivalent de motif méthylgammahydroxypropylsiloxanique.

6. Produits obtenus directement par la mise en œuvre d'un procédé tel que défini aux revendications 4 ou 5.

7. Compositions polymériques améliorées formées de 100 parties d'une composition polymérique de base et de 1 à 70 parties en poids d'un copolymère greffé tel que défini selon l'une quelconque des revendications 1 à 3 et 6; ladite composition polymérique étant compatible avec le copolymère greffé.

8. Compositions polymériques biocompatibles formées d'une composition polymérique de base et de 0,1 à 10% en poids calculés en poids d'équivalent silicone d'une copolymère greffé tel que défini selon l'une quelconque des revendications 1 à 3 et 6, ladite composition polymérique étant compatible avec le copolymère greffé.

9. Compositions polymériques selon la revendication 7 ou 8, caractérisé en ce que la composition polymérique de base est le PVC ou ses copolymères.

10. Articles utilisables notamment pour des applications biomédicales caractérisés en ce qu'ils sont réalisés à partir de compositions conformes à l'une quelconque des revendications 7 à 9.

**Patentansprüche**

1. Pfropfcopolymeres der mittleren allgemeinen Formel

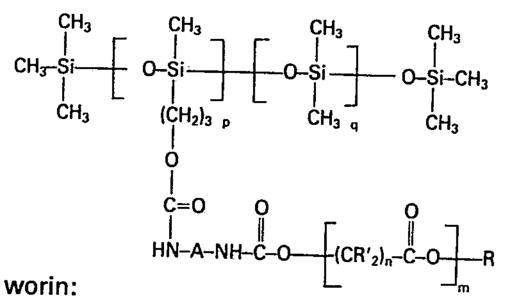

(I)

worin:

p eine ganze oder Dezimalzahl zwischen 1,5 und 6 einschliesslich ist

q eine ganze oder Dezimalzahl zwischen 0 und 20 einschliesslich ist,

A ein zweiwertiger Kohlenwasserstoffrest mit 2 bis 20 Kohlenstoffatomen einschliesslich ist,

n eine ganze Zahl zwischen 3 und 12 einschliesslich ist,

m eine ganze Zahl zwischen 2 und 25 einschliesslich ist;

wobei die Reste R', die identisch oder verschieden sind, ein Wasserstoffatom oder einen Alkylrest $C_1$–$C_4$ bedeuten, der Rest R ein Kohlenwasserstoffrest mit höchstens 24 Kohlenstoffatomen ist.

2. Pfropfcopolymeres gemäss Anspruch 1, dadurch gekennzeichnet, dass:

p zwischen 2 und 4 einschliesslich ist,

q zwischen 6 und 15 einschliesslich ist,

A ein Rest ausgewählt unter:

$$-(CH_2)_4-, -(CH_2)_5, -(CH_2)_6-$$

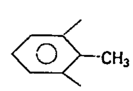, 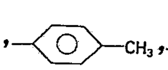, 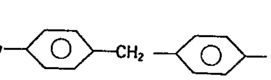

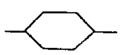, 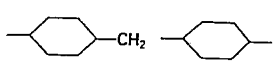

ist,

n 3, 4 oder 5 ist,

m zwischen 4 und 14 einschliesslich ist,

R' ein Wasserstoffatom bedeutet,

R ein gerader oder verzweigter $C_2$–$C_{24}$-Alkylrest ist, oder ein Phenylalkylrest, dessen gerader oder verzweigter Alkylteil $C_2$–$C_{20}$ ist.

3. Pfropfcopolymeres gemäss Anspruch 2, dadurch gekennzeichnet, dass:

n = 5

R ein gerader Alkylrest $C_{14}$–$C_{20}$ ist.

4. Verfahren zur Herstellung von Pfropfcopolymeren, wie sie in irgendeinem der Ansprüche 1 bis 3 definiert sind, dadurch gekennzeichnet, dass man bei einer Temperatur zwischen 90 und 140 °C ein Mol Polylacton der Formel

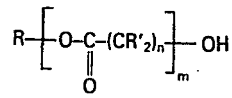

(V)

worin R, R', n und m dieselbe Bedeutung wie oben haben, auf ein Mol Diisocyanat der Formel:

$$OCN{-}A{-}NCO \qquad (IV)$$

worin A dieselbe Bedeutung wie vorstehend hat, einwirken lässt, das erhaltene Reaktionsprodukt dann in einem organischen Lösungsmittel bei einer Temperatur zwischen 90 und 140 °C auf ein Polysiloxan der Formel

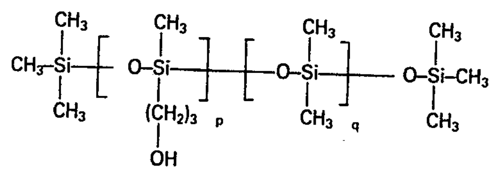

(III)

in solcher Menge einwirken lässt, dass man nur etwa ein Äquivalent der Methylgammahydroxypropylsiloxan-Gruppierung anlagert.

5. Verfahren zur Herstellung von Pfropfcopolymeren, wie sie in einem der Ansprüche 1 bis 3 definiert sind, dadurch gekennzeichnet, dass man im Verlaufe einer ersten Stufe ein Mol Polylacton der Formel (V) wie vorstehend definiert, auf einen molaren Überschuss Diisocyanat der Formel (IV) wie vorstehend definiert, einwirken lässt, um am Ende der Reaktion das überschüssige Diisocyanat entfernt, und dass man im Verlaufe einer zweiten Stufe zu dem in der ersten Stufer erhaltenen Reaktionsgemisch ein Polysiloxan der Formel (III) wie vorstehend definiert, in einem organischen Lösungsmittelmilieu bei einer Temperatur zwischen 90 und 160 °C gemäss einer solchen Menge zugibt, dass man nur etwa ein Äquivalent der Methylgammahydroxypropylsiloxan-Gruppierung anlagert.

6. Produkte, erhalten direkt durch Anwendung eines Verfahrens, wie in den Ansprüchen 4 oder 5 definiert.

7. Verbesserte Polymerzusammensetzungen, gebildet aus 100 Teilen einer Basispolymerzusammensetzung und 1 bis 70 Gewichtsteilen eines Pfropfcopolymeren, wie es gemäss einem der Ansprüche 1 bis 3 und 6 definiert ist, wobei diese Polymerzusammensetzung mit dem Pfropfcopolymeren verträglich ist.

8. Bioverträgliche Polymerzusammensetzungen, gebildet aus einer Basispolymerzusammensetzung und 0,1 bis 10 Gew.-%, berechnet in Äquivalentgewicht Silicon eines Pfropfcopolymeren, wie es gemäss einem der Ansprüche 1 bis 3 und 6 definiert ist, wobei diese Polymerzusammensetzung mit dem Pfropfcopolymeren verträglich ist.

9. Polymerzusammensetzungen gemäss den Ansprüchen 7 oder 8, dadurch gekennzeichnet, dass die Basispolymerzusammensetzung PVC oder seine Copolymeren ist.

10. Artikel, verwendbar insbesondere für biomedizinische Anwendungen, dadurch gekennzeichnet, dass sie aus den Zusammensetzungen gemäss einem der Ansprüche 7 bis 9 hergestellt sind.

## Claims

1. Graft copolymer of average general formula:

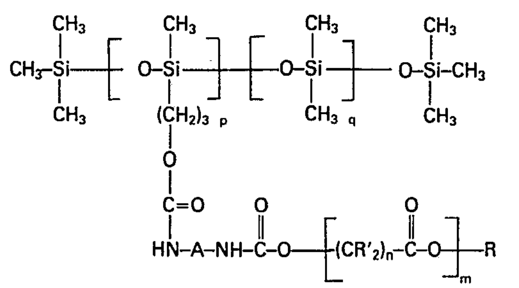
(I)

in which:

p is an integer or decimal between 1.5 and 6 inclusive,

q is an integer or decimal between 0 and 20 inclusive,

A is a divalent hydrocarbon radical containing from 2 to 20 carbon atoms inclusive,

n is an integer between 3 and 12 inclusive

m is an integer between 2 and 25 inclusive.

The radicals R', which are identical or different, denote a hydrogen atom or a $C_1$–$C_4$ alkyl radical.

The radical R is a hydrocarbon radical containing at most 24 carbon atoms.

2. Graft copolymer according to claim 1, characterized in that:

p is between 2 and 4 inclusive

q is between 6 and 15 inclusive

A is a radical chosen from:

$-(CH_2)_4-$, $-(CH_2)_5$, $-(CH_2)_6-$

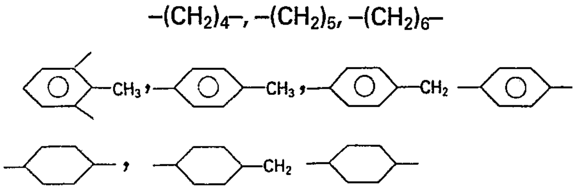

n is 3, 4 or t

m is between 4 and 14 inclusive

R' denotes the hydrogen atom

R is a straight-chain or branched $C_2$–$C_{24}$ alkyl radical, or a phenylalkyl radical in which the straight-chain or branched alkyl moiety is a $C_2$–$C_{20}$ alkyl.

3. Graft copolymer according to claim 2, characterized in that:

n = 5

R is a straight-chain $C_{14}$–$C_{20}$ alkyl radical.

4. Process for the preparation of graft copolymers such as defined according to any one of claims 1 to 3, characterized in that one mole of plyactone of formula

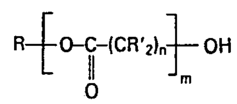
(V)

in which R, R', n and m have the same meaning as above is reacted at a temperature of between 90 and 140 °C with one mole of diisocyanate of formula:

OCN–A–NCO (IV)

in which A has the same meaning as above, and then the reaction product obtain is reacted in an organic solvent at a temperature of between 90 and 140 °C with a polysiloxane of formula:

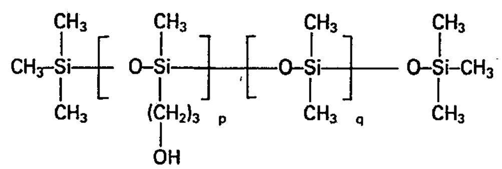
(III)

in a quantity such that only approximately one equivalent of methylgammahydroxypropylsiloxane units is added.

5. Process for the preparation of graft copolymers as defined according to any one of claims 1 to 3, characterized in that during a first step one mole of polylactone of formula (V) as defined above is reacted with a molar excess of diisocyanate of formula (IV) as defined above, and, at the end of reaction, the excess diisocyanate is removed, and in that during a second step a polysiloxane of formula (III) as defined above is added to the reaction mixture obtained in the first step, in an organic solvent medium at a temperature of between 90 and 160 °C, in a quantity such that only approximately one equivalent of methylgammahydroxypropylsiloxane units is added.

6. Products obtained directly by using a process as defined in claims 4 or 5.

7. Improved polymer compositions consisting of 100 parts of a base polymer composition and from 1 to 70 parts by weight of a graft copolymer as defined according to any one of claims 1 to 3 and 6; the said polymer composition being compatible with the graft copolymer.

8. Biocompatible polymer compositions consisting of a base polymer composition and from 0.1 to 10% by weight calculated as weight of silicone equivalent of a graft copolymer as defined according to any one of claims 1 to 3 and 6, the said polymer composition being compatible with the graft copolymer.

9. Polymer compositions according to claim 7 or 8, characterized in that the base polymer composition is PVC or its copolymers.

10. Articles capable of being employed particularly for biomedical applications characterized in that the are made from compositions according to any one of claims 7 to 9.